# EUROPEAN PATENT SPECIFICATION

(11) **EP 3 184 532 B1**
(45) Date of publication and mention of the grant of the patent: **26.09.2018**
(21) Application number: 15202013.7
(22) Date of filing: 22.12.2015
(51) Int. Cl.: C07F 15/00, C07F 7/22

(54) **PROCESS FOR MAKING ALKYLTIN TRIHALIDES AND THEIR USE**
VERFAHREN ZUR HERSTELLUNG VON ALKYLZINN-TRIHALIDEN UND DEREN VERWENDUNG
PROCÉDÉ DE FABRICATION DE TRIHALOGÉNURES D'ALKYLÉTAIN ET LEUR UTILISATION

(43) Date of publication of application: 28.06.2017
(73) Proprietor: ARKEMA B.V., 3196 KE Vondelingenplaat-Rotterdam (NL)
(72) Inventor: DEELMAN, Berth Jan, 4421 DW Kapelle (NL); DE PATER, Jeroen, 3311 DH Dordrecht (NL)

(56) References cited:
- EP-A1- 1 225 177
- US-A- 3 994 944

## Description

### [Field of the invention]

The present invention relates to a process for the preparation of monoalkyltin trihalides.

In particular the present invention relates to an improved process for the preparation of monoalkyltin trihalides involving a redistribution reaction.

More particularly the present invention relates to an improved process for the preparation of monoalkyltin trihalides involving a redistribution reaction in presence of at least one transition metal complex, said complex containing only one monodentate phosphorus ligand per metal centre.

### [Technical problem]

Alkyltin compounds and specifically monoalkyltin compounds are known, as well as their uses such as chlorine-containing polymer-stabilisers, glass coating chemicals and catalysts, and the like.

Sometimes mixtures of monoalkyltin with dialkyltin compounds are used or obtained. For example widely used tin-based compounds in PVC polymers and copolymers are mixtures of mono- and dimethyltin compounds, mono- and dibutyltin compounds or mono- and dioctyltin compounds.

However, trialkyltin compounds are known to be toxic compounds, and dialkyltin compounds have recently been classified as toxic compounds. Toxicity of tin compounds is known to be linked to the specific mono-, di- and trialkyltin compound contents, particularly toxicity is increasing from mono-, to di- and to trialkyltin compound contents. Therefore it is nowadays highly relevant to develop monoalkyltin compounds, with low levels of di- and trialkyltin compounds, in order to avoid toxicity issues.

Attempts to the production of high purity monoalkyltin chlorides have been conducted, for example through redistribution of tetraalkyltin and trialkyltin compounds with tin tetrachloride followed by fractional distillation: monoalkyltin chlorides were obtained in relatively pure form but dialkyltin chlorides were always co-produced in significant quantities rendering these routes less attractive from an industrial perspective.

The objective of the present invention is to propose an improved process to produce monoalkyltin trihalides.

An objective of the present invention is also to propose a process to produce monoalkyltin trihalides with increased yield and less co-produced dialkyltin dihalides (amount < 1 weight %).

An additional objective of the present invention is to propose a process to produce monoalkyltin trihalides with short reaction times.

An objective of the present invention is also to propose a process to produce monoalkyltin trihalides under mild reaction conditions.

Another objective of the present invention is to propose a process to produce monoalkyltin trihalides at lower temperatures.

Still another objective of the present invention to propose a process to produce monoalkyltin trihalides with a high selectivity.

Still an additional objective is to propose a process to produce monoalkyltin trihalides using a transition metal complex containing only one monodentate phosphorus ligand per metal centre.

### [BACKGROUND OF THE INVENTION] Prior art

Tetraalkyltin or mixtures of tetraalkyltin and trialkyltin halides are generally produced by alkylation of tin tetrahalide with alkylmagnesium or alkylaluminium compounds.

The document US 3,432,531 discloses a process of for preparing an alkyl organotin compound by the reaction of an alkyl halide, magnesium, and tin tetrahalide.

The Documents Neumann, W.P., Ziegler, K. GB 923179, 1963; Neumann, W.P., Ziegler, K. DE 1157617, 1963; M & T Chemicals Inc., NL 6601352, 1966; Buschhoff, M.; Mueller, K.H., Schering AG, US 3994944, 1976 and Schumacher, O.; Franke, L. Crompton GmbH, EP 1389620, 2004 describe the alkylation of tin tetrahalide with a trialkylaluminum compounds.

Tetraalkyltin compounds or mixtures containing tetraalkyltin and trialkyltin halides can be further reacted by redistribution with tin tetrahalide to produce mixtures of monoalkyltin trihalide, dialkyltin dihalide and trialkyltin halide: Johnson, E.W.; Church, J.M., Metal & Thermit Corp., US 2599557, 1952, Neumann et al. Liebigs Ann. Chem. 663 (1963) 11 and Carlisle Chemical Works Inc., NL 6513659, 1966.

The separation of monoalkyltin halides from the mixtures of alkyltin compounds produced through the processes mentioned above is usually carried out by distillation.

The document US 3,931,264 discloses an alternative separation method, aqueous extraction.

Several modified redistribution processes that seek to improve the yield of monoalkyltin trihalides have been disclosed:

The document US 3,459,779 describes the redistribution of dialkyltin dihalides, trialkyltin halides, tetraalkyltin with tin tetrahalides in the presence of polar substances, which in particular increase the polarity of the reaction medium, such as phosphorus oxychloride or other phosphorus-halogen compounds, preferably in admixture with phosphorus pentoxide, hydrochloric acid.

Kugele, T.G.; Parker, D.H., Cincinatti Milacron Chemicals Inc., US 3862198, 1975 describe the use of quaternary ammonium salts as catalysts for preparing monoalkyltin trihalides from the redistribution of dialkyltin dihalides with tin tetrahalides.

The document US 3,454,610 also discloses a process for the synthesis of organometallic halides by redistribution. The reaction medium is an aliphatic sulfoxide and reacting therein is an organometallic compound with an organometallic halide to yield another organometallic halide.

The document US 3,862,198 discloses the use of onium salts as catalysts for redistribution of di- or trialkyl tin halides or tetraalkyl tins with tin tetrahalide to form monoalkyltin trihalides.

The documents US 4,604,475 and Buschhoff, M.; Neumann, W.P., Schering A.-G., EP 158163, 1985 disclose how organotin halides are obtained by the redistribution of appropriate mixtures of organotin compounds in the presence of stannous fluoride as a catalyst.

The document EP 1225177 discloses a transition metal-catalyzed redistribution process for the production of monoalkyltin trihalides. The process is a redistribution reaction between tetraorganotins, triorganotin halides or diorganotin halides and tin tetrahalides, said process comprising contacting tetra-(R4Sn), tri-(R3SnX) or diorganotin halides (R2SnX2) with SnX4 to afford said monoorganotin trihalides in the presence of at least one transition metal complex, said complex comprising at least one transition metal M, selected from Group VIII of the periodic table of elements, at least one monodentate ligand or bidentate ligand, L, L', or L", and optionally one or more anions, X, of an organic or inorganic acid, as a catalyst or catalyst precursor.

A direct reaction of tin metal or stannous chloride with higher alkyl chlorides has also been disclosed as a method to form monoalkyltin chlorides (Albright & Wilson Ltd., NL 6614326, 1967 and Bulten, E.J., Cosan Chem. Corp., US3824264, 1974).

The document EP1743898 discloses a transition metal-catalyzed process for the production of monoalkyltin trihalides and dialkyltin halides from stannous halide and optionally Sn metal. The process comprises contacting the corresponding alkene or cycloalkene, stannous halide SnHal₂, hydrogen halide HHal and optionally Sn metal, in the presence of at least one transition metal-based catalyst, thereafter isolating the monoalkyltin trihalides or dialkyltin halides from the medium.

None of the prior art documents discloses a process with mono phosphorus-containing ligands transition metal complexes of the present invention.

### [Brief description of the invention]

Surprisingly a process has been found for the production of monoorganotin trihalides that involves a redistribution reaction between tetraorganotins, triorganotin halides or diorganotin dihalides and tin tetrahalides, said process comprising contacting tetraorganotin, triorganotin halide or diorganotin halide with tin tetrahalide in the presence of at least one transition metal complex, said complex containing only one monodentate phosphorus ligand per metal centre, as catalyst or catalyst precursor to afford said monoorganotin trihalides with an increased yield, characterized that the metal of said transition metal complex is chosen from Nickel (Ni), Palladium (Pd) and/or Platinum (Pt).

Surprisingly also a process has been found for the production of monoalkyltin trihalides that involves a redistribution reaction between tetraalkyltins, trialkyltin halides or dialkyltin dihalides and tin tetrahalides, said process comprising contacting tetraalkyltin, trialkyltin halide or dialkyltin dihalide with tin tetrahalide in the presence of at least one transition metal complex, said complex containing only one monodentate phosphorus ligand per metal centre, as catalyst or catalyst precursor to afford said monoalkyltin trihalides with an increased yield, characterized that the metal of said transition metal complex is chosen from Nickel (Ni), Palladium (Pd) and/or Platinum (Pt).

### [Detailed description of the invention]

According to a first aspect, the present invention relates to a process for the production of monoorganotin trihalides involving a redistribution reaction between tetraorganotins (R₄Sn), triorganotin halides (R₃SnX) or diorganotin halides (R₂SnX₂) and tin tetrahalides (SnX₄), said process comprising contacting tetraorganotin, triorganotin halide or diorganotin halide with tin tetrahalide in the presence of at least one transition metal complex, said complex containing only one monodentate phosphorus ligand per metal centre, as catalyst or catalyst precursor to afford said monoorganotin trihalides, characterized that the metal of said transition metal complex is chosen from Nickel (Ni), Palladium (Pd) and/or Platinum (Pt).

According to a second aspect, the present invention relates to a process for the production of monoalkyltin trihalides involving a redistribution reaction between tetraalkyltins, trialkyltin halides or dialkyltin dihalides and tin tetrahalides, said process comprising contacting tetraalkyltin, trialkyltin halide or dialkyltin dihalide with tin tetrahalide in the presence of at least one transition metal complex, said complex containing only one monodentate phosphorus ligand per metal centre, as catalyst or catalyst precursor, characterized that the metal of said transition metal complex is chosen from Nickel (Ni), Palladium (Pd) and/or Platinum (Pt).

In a third aspect the present invention relates to the use of a transition metal complex, said complex containing only one monodentate phosphorus ligand per metal centre, for the production of monoalkyltin trihalides involving a redistribution reaction between tetraalkyltins, trialkyltin halides or dialkyltin dihalides and tin tetrahalides, said process comprising contacting tetraalkyltin, trialkyltin halide or dialkyltin dihalide with tin tetrahalide, characterized that the metal of said transition metal complex is chosen from Nickel (Ni), Palladium (Pd) and/or Platinum (Pt).

In a fourth aspect the present disclosure relates to the use of the monoorganotin trihalides and monoalkyltin trihalides obtained by the process in glass coating application, as catalysts for polyurethane production and stabilizers for polyvinylchloride.

By the term "ligand" as used is denoted a molecule that binds to a central metal atom to form a coordination complex

**With regard to the** monoalkylin trihalide obtained by the process of the invention, it is a monoalkyltin trihalide of the general formula RSnX₃, wherein R is an alkyl or cycloalkyl and X = Cl, Br or I.

The alkyl R can be linear or branched.

Preferably the alkyl or cycloalkyl R has between 1 and 30 carbon atoms. More preferably between 1 and 25, and particular preferably between 1 and 10.

**With regard to the catalyst according to the process of the invention,** it is a transition metal complex containing only one monodentate phosphorus ligand per metal centre M.

The transition metal M in the complex is a transition metal chosen from Nickel (Ni), Palladium (Pd) and/or Platinum (Pt), and most advantageously the transition metal is Pt.

The transition metal complex comprises in one embodiment following structure given in following corresponding formula (1)

A₁-M(A)ₙ (1)

wherein M is the transition metal, n is 2 or 3, A₁ and A are ligands. The ligand A₁ is a monodentate phosphorus ligand. The ligands A can be the same or different.

The transition metal complex of formula (1) comprises in one embodiment with n=3 following structure given in following corresponding formula (1a) 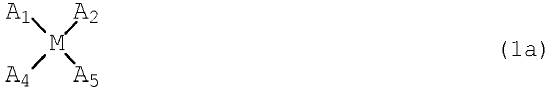 wherein M is the transition metal and A₁, A₂, A₄, and A₅ are ligands.

One of the ligands A₁ A₂, A₄, and A₅ is a monodentate phosphorus ligand. Preferably only one of the ligands A₁ A₂, A₄, or A₅ is a monodentate phosphorus ligand.

The transition metal complex of formula (1) comprises in another embodiment with n=2 following structure given in following corresponding formula (1b) 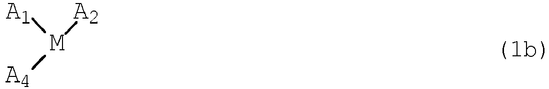 wherein M is the transition metal and A₁, A₂ and A₄ are ligands.

One of the ligands A₁ A₂ and A₄ is a monodentate phosphorus ligand. Preferably only one of the ligands A₁ A₂ or A₄ is a monodentate phosphorus ligand.

The transition metal complex comprises in still another embodiment following structure given in following corresponding formula (2) 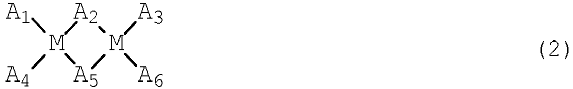 wherein M is the transition metal and A₁ to A₆ are ligands.

The ligands A₂ and A₅ which form the bridge between the two transition metals M of the dimeric transition metal complex of formula (2) are preferably chosen from an anion of the conjugate base of an organic or inorganic acid.

At least one of the ligands A1 or A4 and A3 or A6 is preferably chosen from an anion of the conjugate base of an organic or inorganic acid or tin trichloride anion. More preferably one of ligands A1 or A4 and A3 or A6 is chosen to be Cl, Br, I or SnCl₃ anions

At least one of the ligands A1 or A4 and A3 or A6 is preferably chosen to be a monodentate phosphorus ligand. Preferably only one of the ligands A1 or A4 and A3 or A6 is chosen to be a monodentate phosphorus ligand

In a preferred first embodiment the catalyst according to the process of the invention is a dimeric catalyst as given generally in formula (3)

[M(µ-X₁)X₂(L)]₂ (3)

wherein M is the transition metal, L is a monodentate phosphorus ligand, X₁ is the anion of the conjugate base of an organic or inorganic acid and X₂ is the anion of the conjugate base of an organic or inorganic acid or tin trichloride anion.

The general formula (3) corresponds to structures (4) or (5):

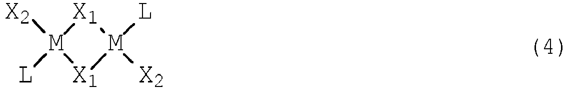

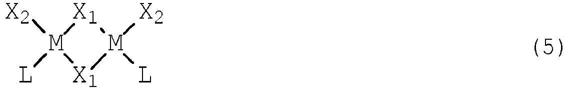

Preferably M is a metal selected from group 10 of the periodic table of elements according to the IUPAC naming system and more preferably chosen from Ni, Pd and/or Pt and most advantageously the transition metal is Pt.

Preferably the anion X₁ in formula (3), (4) or (5) is the anion of Cl, Br or I and the anion X₂ in formula (3), (4) or (5) is the anion of Cl, Br, I or SnCl₃.

In a specific case of the preferred first embodiment X₁ and X₂ can be the same so that the catalyst according to the process of the invention is a dimeric catalyst as given generally in formula (6)

[M(µ-X)X(L)]₂ (6)

wherein M is the transition metal, L is a monodentate phosphorus ligand and X is the anion of the conjugate base of an organic or inorganic acid.

The general formula (6) corresponds to structures (7) or (8):

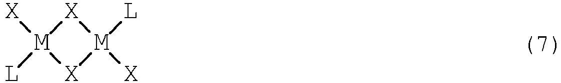

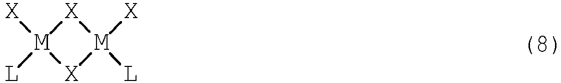

Preferably M is a metal selected from group 10 of the periodic table of elements according to the IUPAC naming system and more preferably chosen from Ni, Pd and/or Pt and most advantageously the transition metal is Pt.

Preferably the anion X in formula (6), (7) or (8) is the anion of Cl, Br or I.

In a preferred second embodiment the catalyst according to the process of the invention is a dimeric transition metal catalyst as given by formulas (9) and (10) 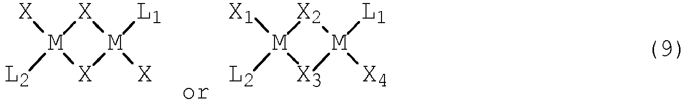 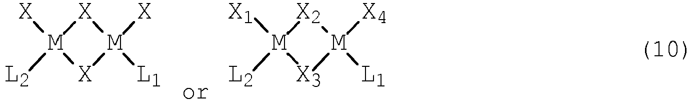 wherein M is the transition metal, L1 and L2 are a monodentate phosphorus ligand .

Preferably M is a metal selected from group 10 of the periodic table of elements according to the IUPAC naming system and more preferably chosen from Ni, Pd and/or Pt and most advantageously the transition metal is Pt.

Preferably the anions X, X₂ and X₃ in formula (9) or (10) are the anions of Cl, Br or I and the anions X₁ and X₄ in formula (9) or (10) are the anions of Cl, Br, I or SnCl₃.

In a preferred third embodiment the catalyst according to the process of the invention is a monomeric transition metal catalyst as given by formula (11)

[MX₂(S₁)(L)] (11)

wherein M is the transition metal, L is a monodentate phosphorus ligand, S₁ is a monodentate ligand and X is the anion of the conjugate base of an organic or inorganic acid.

Preferably M is a metal selected from group 10 of the periodic table of elements according to the IUPAC naming system and more preferably chosen from Ni, Pd and/or Pt and most advantageously the transition metal is Pt.

Preferably the anion X in formula (11) is the anion of Cl, Br or I.

Preferably the monodentate ligand L in formula (11) is an organic phosphorus ligand.

Preferably the monodentate ligand S₁ in formula (11) is chosen from organic nitriles RCN, alkyl ethers OR₂ or dialkyl sulfoxides R₂SO. More preferably S is chosen from MeCN or EtCN.

In a preferred fourth embodiment the catalyst according to the process of the invention is a monomeric zerovalent transition metal catalyst containing only one monodentate phosphorus ligand, as given by formulae (12)and (13)

[(L)Pt(S₂)(S₃] (12)

[(L)Pt(S₄^S₅)] (13)

wherein Pt is the transition metal, L is a monodentate phosphorus ligand, S2 and S3 are monodentate ligands and S4^S5 is a bidentate ligand.

Preferably the ligands S₂ and S₃ are chosen from ethene, ethyne, propene, propyne, styrene, maleic acid anhydride, fumaronitrile or tetracyanoethylene.

Preferably the bidentate ligand S₄^S₅ is chosen from *cis,*cis-1,5-cyclooctadiene (COD), trans,trans-dibenzylidene acetone (dba), 1,3-divinyl-1,1,3,3-tetramethyldisiloxane (dvtms), diallyl ether (AE), 1,6-hexadiene or N,N,N',N'-tetramethylethylenediamine (TMEDA). More preferably the bidentate ligand S₄^S₅ is dvtms.

According to the invention the respective ligands L, L1 and/or L2 in all the respective formulas (3) to (13) are a monodentate phosphorus ligand.

Preferably the phosphorus ligand-to-metal M molar ratio is between 0.95:1 and 1:0.95 and more preferably is 1:1.

Preferably the monodentate ligands L, L1 and L2 are each chosen from an organic phosphine of the formula PR₁R₂R₃ wherein R₁ , R₂ and R₃ are organic groups which can be identical or different.

According to the invention the ligand L, L1 and/or L2 has the general structure 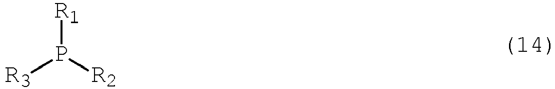 wherein R₁, R₂ and R₃ are organic groups which can be identical or different.

Preferably R₁, R₂ and R₃ in formula (14) are chosen from alkyl groups, aryl groups or substituted alkyl or aryl groups. The substituted alkyl or aryl groups can have one or more substituents.

In a particular embodiment the R₁, R₂ and R₃ are chosen from phenyl, alkyl-substituted aryl groups, (cyclo)alkyl-substituted aryl groups, alkoxy-substituted aryl groups, mixed alkyl-/alkoxy-subsitituted aryl groups and (optionally substituted) aryl-substituted aryl groups.

In a particular preferred embodiment the R₁, R₂ and R₃ are chosen from alkyl-substituted aryl groups, (cyclo)alkyl-substituted aryl groups, alkoxy-substituted aryl groups, mixed alkyl-/alkoxy-subsitituted aryl groups and (optionally substituted) aryl-substituted aryl groups.

In a particular preferred embodiment of this invention such aryl groups are chosen from 2,3-subsituted, 2,6-subsituted, 2,4,6-subsituted, 3,4-substituted, 3,5-substituted and 3,4,5-substituted aryl groups. In the case alkyl-substituted aryl groups, preferred alkyl groups are CₙH₂ₙ₊₁ alkyls with n from 1 to 15 and more preferably aklkyl group is chosen from methyl, ethyl, propyl, 2-propyl, n-butyl-, 2-butyl, iso-butyl, tert-butyl, n-pentyl, tert-pentyl, neo-pentyl, iso-pentyl, sec-pentyl, 3-pentyl, n-hexyl or mixtures thereof.

**With regard to the process for the production of monoalkyltin trihalides** involving the redistribution reaction between tetraalkyltins, trialkyltin halides or dialkyltin halides and tin tetrahalides, said process comprising contacting tetraalkyltin, trialkyltin halide or dialkyltin halide or mixtures thereof with tin tetrahalide, said process takes place in the presence of at least one transition metal complex containing only one monodentate phosphorus ligand per metal centre. The process can be carried out with or without solvent. The catalyst can be added immediately or later during the reaction.

The solvent is chosen preferably from an inert organic and aprotic solvents

The solvent is more preferably chosen from aromatic solvents, chloroaromatics, alkanes or mixtures thereof. In particular toluene, xylene and n-octane proved to be appropriate solvents.

The process can be carried with a molar excess of one of the reagents or using stoichiometric molar ratios, 1:3 molar ratio for the reaction between R₄Sn and SnX₄, 1:2 molar ratio for the reaction between R₃SnX and SnX₄ and 1:1 molar ratio for the reaction between R₂SnX₂ and SnX₄. For the reaction between R₄Sn and SnX₄ the ratio can vary from 100:1 to 1:100, more preferred from 2:1 to 1:15 and preferably from 1:2 to 1:5. For the reaction between R₂SnX₂ and SnX₄ the ratio can vary from 100:1 to 1:100, more preferred from 5:1 to 1:5 and preferably from 1.5:1 to 1:1.5.

In a specific embodiment of the invention the concentration of the tin reagents employed falls within the range of 0.01 to 5 M, more preferred 1.0-4.0 M.

The transition metal catalyst quantity expressed in molar quantity of the transition metal M based on the total amount of Sn used can be <5mol% and even <0.1mol%.

The transition metal catalyst is preferably employed in the range between 1·10⁻⁵ and 1·10⁻¹ mol, more preferably in the range between 1·10⁻⁵ and 1·10⁻² mol and most preferably between 1·10⁻⁵ and 1·10⁻³ mol of metal M of the catalyst per mol of total Sn present.

**With regard to the operating conditions of the process** the reaction is made continuously or in batch. The batch process is preferred. Temperature can be, by way of example, from ambient to 130°C. A range from 20°C to 120°C is advantageous and more advantageous the reaction temperature of the process is from 20°C to 100°C. Preferred reaction times range from a few seconds to 48 hours. The pressure in the reaction vessel is under 5 bar. The reaction is carried out in any usual apparatus. The reaction can be checked by taking samples and conventional analysis. The monoalkyltin trihalides can be separated from the reaction medium by any means such as, by way of examples, distillation, solvent extraction, crystallisation.

The conversion of the process according to the invention is preferably more than 85%, based on tin. More preferably the yield is more than 88% and advantageously more than 90% and more advantageously more than 92%.

The yield of the process according to the invention is preferably more than 85%, based on tin. More preferably the yield is more than 88% and advantageously more than 90% and more advantageously more than 92%.

The selectivity of the reaction based on tin according to process of the invention is at least 75%, preferably at least 80% and more preferably at least 85% and advantageously at least 88%.

According to a preferred embodiment the process according to the invention has a yield more than 90% and a selectivity of at least 91%.

In a preferred embodiment of the invention the process concerns a catalyzed redistribution reaction with redistribution between R₂SnCl₂ (R is Me, Et, propyl, hexyl or octyl more preferably R is n-butyl and n-octyl) and SnCl₄ to afford RSnCl₃. For R = n-butyl and n-octyl, the monoalkyltin trichloride was obtained starting from R₂SnCl₂ and SnCl₄ in 90 and 94 % yield, respectively, whereas in the blank experiment (no catalyst added) only unreacted starting materials were recovered.

In another preferred embodiment of the invention the process concerns a catalyzed redistribution reaction with redistribution between R₄Sn (R is Me, Et, propyl, hexyl or octyl more preferably R is n-butyl or n-octyl) and SnCl₄ to afford RSnCl₃ using the same catalyst as defined before.

**With regard to the use of the monoalkyltin trihalide obtained mention may be made of** PVC stabilizer, glass coating precursor, catalyst for chemical reactions as for example polyurethane production.

### [Methods of evaluation]

About the Sn yield and selectivity:
a1 is the number of moles of Sn (present as tetraalkyltin (R₄Sn), trialkyltin halide (R₃SnX), dialkyltin dihalide (R₂SnX₂) plus tin tetrahalide (SnX₄)) at the beginning of the reaction.
a2 is the total number of moles of Sn (present as R₄Sn, R₃SnX or R₂SnX₂ plus SnX₄) converted.
a3 is the number of moles of monoalkyltin trihalide produced.
a4 is the number of moles of dialkyltin dihalide produced.
a5 is the number of moles of tin dihalide produced.

The yield of monoalkyltin trihalide is defined as a3/a1. The conversion is defined as a2/a1.

For the reaction between dialkyltin dihalide and tin tetrahalide the Sn selectivity is defined as the ratio a3/(a3+a5).

For the reaction between tetraalkyltin and tin tetrahalide the selectivity is defined as a3/(a3+a4+a5)

The moles of a1, a2, a3 and a4 are determined by Gas Liquid Chromatography (GLC) analysis of a sample from the liquid part of the reaction. The moles of a5 are determined by filtering off the formed tin dichloride, washing with an appropriate solvent, drying of the remaining solids in an oven under vacuum, followed by gravimetric determination.

### [Examples]

### Abbreviations

Bu₄Sn - tetrabutyltin
Bu₃SnCl - tributyltin chloride
Bu₂SnCl₂ - dibutyltin dichloride
BuSnCl₃ - monobutyltin trichloride
SnCl₄ - tin tetrachloride
SnCl₂ - tin dichloride

### Example 1. Preparation of BuSnCl₃ from Bu₂SnCl₂ and SnCl₄

In a 250 mL roundbottom flask with a magnetic stirring bar, placed in Radleys Carrousel 6 Plus Reaction Station™, was weighed Bu₂SnCl₂ (46.27 grammes, 150.0 mmol). The flask was inertisized three times at 60 °C, followed by introduction of the complex [Pt(µ-Cl)Cl(T4TP)]₂ (8.5 mg, 0.0149 mmol Pt) and one more vacuum-nitrogen cycle. Next, SnCl₄ (39.10 grammes, 150.1 mmol) was added by means of a syringe. The carrousel was heated to a plate temperature of 95 °C, which corresponded to a temperature of the flask contents of 88 °C.

The reaction was continued for 20 hours, after which the reaction mixture was cooled to ambient temperature, the liquid phase sampled and analyzed by GC (after ethylation with excess EtMgCl), giving the following composition (weight %): SnCl₄ 3.14 %; BuSnCl₃ 89.53 %; Bu₂SnCl₂ 3.90 %. The remaining reaction mixture was filtered over a glass frit and the residue washed with toluene (1 * 10 mL) and heptane (1 * 10 mL). The filter residue (SnCl₂) was dried in a stove at 50 °C for 2 hours and weighed (3.37 grammes, 17.77 mmol).

### Example 2-10. Preparation of BuSnCl₃ from Bu₂SnCl₂ and SnCl₄.

The reactions were carried out in a similar fashion as Example 1, with the following differences:
Example 2) Bu₂SnCl₂ (46.38 grammes, 150.1 mmol), [Pt(µ-Cl)Cl(TXP)]₂ (9.2 mg, 0.0150 mmol Pt) and SnCl₄ (39.00 grammes, 149.7 mmol) were used. After 20 h the liquid phase had the following composition (weight %): SnCl₄ 2.68 %; BuSnCl₃ 91.36 %; Bu₂SnCl₂ 3.00 %. The amount of SnCl₂ was 2.49 grammes (13.13 mmol).
Example 3) A 500 mL round bottom flask was used with an electronic heating mantle and overhead stirrer. Bu₂SnCl₂ (150.00 grammes, 485.8 mmol), [Pt(µ-Cl)Cl(TXP)]₂ (29.8 mg, 0.0486 mmol Pt) and SnCl₄ (126.60 grammes, 485.8 mmol) were used. The reaction temperature was 80 °C. After 29 h the liquid phase had the following composition (weight %): SnCl₄ 1.70 %; BuSnCl₃ 96.20 %; Bu₂SnCl₂ 2.10 %. The amount of SnCl₂ was 7.45 grammes (39.30 mmol).
Example 4) A 500 mL round bottom flask was used with an electronic heating mantle and overhead stirrer. Bu₂SnCl₂ (150.00 grammes, 485.8 mmol), [Pt(µ-Cl)Cl(TXP)]₂ (29.8 mg, 0.0486 mmol Pt) and SnCl₄ (126.60 grammes, 485.8 mmol) were used. The reaction temperature was 65 °C. After 48 h the liquid phase had the following composition (weight %): SnCl₄ 1.90 %; BuSnCl₃ 95.70 %; Bu₂SnCl₂ 2.40 %. The amount of SnCl₂ was 5.54 grammes (29.20 mmol).
Example 5) Bu₂SnCl₂ (46.27 grammes, 149.7 mmol), [Pt(µ-Cl)Cl(Ph(An*)₂P)]₂ (12.1 mg, 0.0149 mmol Pt) and SnCl₄ (39.10 grammes, 150.1 mmol) were used. After 20 h the liquid phase had the following composition (weight %): SnCl₄ 2.75 %; BuSnCl₃ 94.01 %; Bu₂SnCl₂ 2.4 %. The amount of SnCl₂ was 3.30 grammes (17.40 mmol).
Example 6) Bu₂SnCl₂ (46.29 grammes, 149.8 mmol), [Pt(µ-Cl)Cl(Ph(An*)₂P)]₂ (12.2 mg, 0.0150 mmol Pt) and SnCl₄ (39.16 grammes, 150.3 mmol) were used. The reaction was carried out at 80 °C. After 24 h the liquid part had the following composition (weight %): SnCl₄ 3.68 %; BuSnCl₃ 89.86 %; Bu₂SnCl₂ 3.90 %. The amount of SnCl₂ was 2.36 grammes (12.45 mmol).
Example 7) Bu₂SnCl₂ (46.35 grammes, 147.1 mmol), [Pt(µ-Cl)Cl(D4TXP)]₂ (8.6 mg, 0.0147 mmol Pt) and SnCl₄ (38.15 grammes, 146.5 mmol) were used. After 20 h the liquid phase had the following composition (weight %): SnCl₄ 3.26 %; BuSnCl₃ 93.69 %; Bu₂SnCl₂ 3.0 %. The amount of SnCl₂ was 3.09 grammes (16.30 mmol).
Example 8) Bu₂SnCl₂ (46.36 grammes, 150.2 mmol), [Pt(µ-Cl)Cl(T4TBP)]₂ (10.5 mg, 0.0151 mmol Pt) and SnCl₄ (39.02 grammes, 149.8 mmol) were used. After 20 h the liquid phase had the following composition (weight %): SnCl₄ 2.01 %; BuSnCl₃ 90.86 %; Bu₂SnCl₂ 2.80 %. The amount of SnCl₂ was 2.92 grammes (15.40 mmol).
Example 9) A 500 mL roundbottom flask was used with an electronic heating mantle and overhead stirrer. Bu₂SnCl₂ (150.00 grammes, 485.8 mmol), [Pt(µ-Cl)Cl(T4TBP)]₂ (33.8 mg, 0.0486 mmol Pt) and SnCl₄ (126.60 grammes, 485.8 mmol) were used. The reaction was carried out at 80 °C. After 22 h the liquid phase had the following composition (weight %): SnCl₄ 2.90 %; BuSnCl₃ 94.30 %; Bu₂SnCl₂ 2.80 %. The amount of SnCl₂ was 7.95 grammes (41.90 mmol).
Example 10. Bu₂SnCl₂ (100.00 grammes, 320.30 mmol), [Pt(µ-Cl)Cl((Me₄Tet)₃P)]₂ (27.8 mg, 0.0324 mmol Pt) and SnCl₄ (83.43 grammes, 320.3 mmol) were used. The reaction was carried out at 80 °C. After 25 h the liquid phase had the following composition (weight %): SnCl₄ 0.99 %; BuSnCl₃ 98.25 %; Bu₂SnCl₂ 0.80 %. The amount of SnCl₂ was 5.14 grammes (27.11 mmol).

The results of these different experiments with dimeric catalyst are presented in Table 2 as examples 1 to 10 and compared to results obtained using (pre)catalysts [PtCl₂L₂] from the prior art (entries comparative examples 1-3).

**Table 1 - Ligands L of general formula (14) PR₁R₂R₃ of catalyst: abbreviation and formula**

| **abbreviation** | **formula** | **name** |
|---|---|---|
| PPh3 | 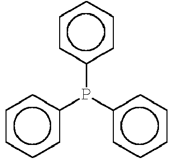 | Triphenylphosphine |
| T4TP | 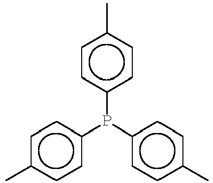 | Tris(4-methylphenyl)phosphine |
| TXP | 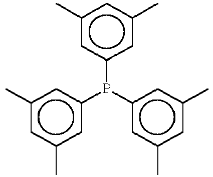 | Tris(3,5-dimethylphenyl)phosphine |
| Ph(An*)₂P | 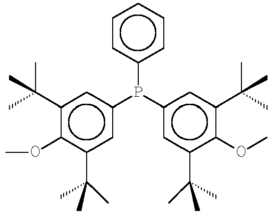 | Bis(3,5-di(tert-butyl)4-methoxyphenyl)phenylphosphine |
| D4TXP | 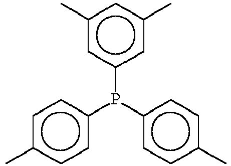 | Bis(4-methylphenyl)(3,5-dimethylphenyl) phosphine |
| T4TBP | 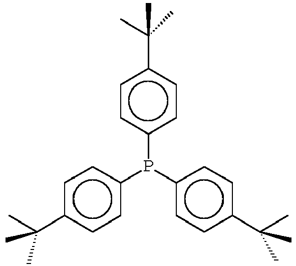 | Tris(4-tert-butylphenyl) phosphine |
| (Me₄Tet)₃P | 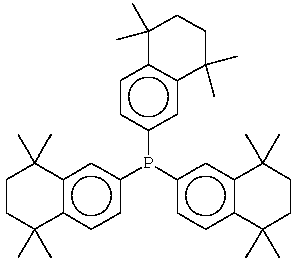 | Tris(1,1,4,4-tetramethyl-1,2,3,4-tetrahydronaphthyl) phosphine |

Results of reactions of Bu₂SnCl₂ with SnCl₄ of a molar ratio of 1:1 in presence of several catalyst are shown in table 2.

**Table 2 - summary of results**

| | Catalyst | T [°C] | Pt [mol%] ^{a} | Conversi on (%)^{b} | Selecti vity [%]^{b,c} | Yield [%]^{b} |
|---|---|---|---|---|---|---|
| Comparative example 1 | [PtCl₂(PPh₃)₂] | 88 | 0.005 | 79 | 90 | 71 |
| Comparative example 2 | [PtCl₂(T4TP)₂] | 88 | 0.005 | 90 | 92 | 83 |
| Comparative example 3 | [PtCl₂(TXP)₂] | 88 | 0.005 | 74 | 95 | 70 |
| Example 1 | [Pt(µ-Cl)Cl(T4TP)]₂ | 88 | 0.005 | 93 | 93 | 87 |
| Example 2 | [Pt(µ-Cl)Cl(TXP)]₂ | 88 | 0.005 | 94 | 95 | 90 |
| Example 3 | [Pt(µ-Cl)Cl(TXP)]₂ | 80 | 0.005 | 96^{d} | 96 | 92^{d} |
| Example 4 | [Pt(µ-Cl)Cl(TXP)]₂ | 65 | 0.005 | 96^{e} | 97 | 93^{e} |
| Example 5 | [Pt(µ-Cl)Cl(Ph(An*)₂P)]₂ | 88 | 0.005 | 97 | 94 | 91 |
| Example 6 | [Pt(µ-Cl)Cl(Ph(An*)₂P)]₂ | 80 | 0.005 | 96^{f} | 95 | 91^{f} |
| Example 7 | [Pt(µ-Cl)Cl(D4TXP)]₂ | 88 | 0.005 | 94 | 94 | 89 |
| Example 8 | [Pt(µ-Cl)Cl(T4TBP)]₂ | 88 | 0.005 | 96 | 94 | 91 |
| Example 9 | [Pt(µ-Cl)Cl(T4TBP)]₂ | 80 | 0.005 | 94^{g} | 96 | 90^{g} |
| Example 10 | [Pt(µ-Cl)Cl((Me₄Tet)₃P)]₂ | 80 | 0.005 | 98^{h} | 96 | 93^{h} |

| | | | | | | |
|---|---|---|---|---|---|---|
| ^{a} - Mol % of Pt relative to total amount of Sn.^{b} After 20 h unless indicated otherwise.^{c} Byproduct = SnCl₂.^{d} After 29 hours.^{e} After 48 hours.^{f} After 24 hours.^{g} After 22 hours.^{h} After 25 hours. | | | | | | |

### Example 11. Preparation of ⁿOctSnCl₃ from ⁿOct₂SnCl₂ and SnCl₄

In this experiment, in a 250 mL roundbottom flask ⁿOct₂SnCl₂ (50.03 g, 114.7 mmol), [Pt(µ-Cl)Cl((Me₄Tet)₃P)]₂ (9.7 mg, 0.0115 mmol) and SnCl₄ (29.93 g, 114.9 mmol) were reacted at 88 °C for 22 h. After cooling the reaction mixture was filtered and the liquid phase was sampled and analyzed by GC (after ethylation with excess EtMgCl) for the amount of ⁿOctSnCl₃ present (72.1 g, 213.0 mmol, yield: 93 %) The remaining solids (SnCl₂) were washed with toluene (10 mL) and heptane (10 mL), dried under vacuum and weighed (2.30 g, 12.1 mmol, yield 5 %).

### Example 12. Preparation of BuSnCl₃ from Bu₂SnCl₂ and SnCl₄.

The reaction was carried out in a similar fashion as Example 3, with the following differences:
a) Bu₂SnCl₂ (47.98 grammes, 142.6 mmol), [Pt(dvtms)((T4TP)] (9.8 mg, 0.0143 mmol Pt) and SnCl₄ (37.15 grammes, 142.6 mmol) were used.
b) The reaction was carried out at 83 °C.
c) After 22 h the liquid phase had the following composition (weight %): SnCl₄ 3.70 %; BuSnCl₃ 89.39 %; Bu₂SnCl₂ 4.00 %. The amount of SnCl₂ was 2.88 grammes (15.19 mmol). Conversion: 92 %; Selectivity: 94 %; Yield of BuSnCl₃: 86 %.

The conversion of all examples 1 to 12 according to the process of the invention is more than 90%.

The selectivity of the reaction based on tin of all examples 1 to 12 according to the process of the invention is at least 85%.

The yield of all examples 1 to 10 according to the process of the invention is more than 85%.

The examples 1 to 12 according to the process of the invention has a yield more than 85% and a selectivity of at least 90%.

## Claims

1. Process for the production of monoalkyltin trihalides involving a redistribution reaction between tetraalkyltins, trialkyltin halides or dialkyltin dihalides and tin tetrahalides, said process comprising contacting tetraalkyltin, trialkyltin halide or dialkyltin dihalide with tin tetrahalide in the presence of at least one transition metal complex, said complex containing only one monodentate phosphorus ligand per metal centre, to afford said monoalkyltin trihalides, characterized that the metal of said transition metal complex is chosen from Nickel (Ni), Palladium (Pd) and/or Platinum (Pt).

2. The process according to claim 1 characterized that the metal of said transition metal complex is Pt.

3. The process according to claim 1 or 2, characterized that said transition metal complex comprises following structure given in following corresponding formula (1)
A₁-M(A)ₙ (1)
wherein M is the transition metal, n is 2 or 3, A₁ and A are ligands and the ligand A₁ is a monodentate phosphorus ligand.

4. The process according to any of claims 1 to 3, characterized that said transition metal complex comprises following structure given in following corresponding formula (1a) 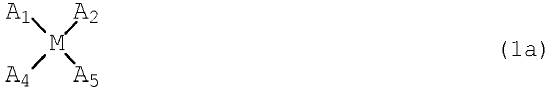 wherein M is the transition metal and A₁, A₂, A₄, and A₅ are ligands.

5. The process according to claims 1 or 2, characterized that said transition metal complex is a dimeric transition metal complex of the general formula (2) 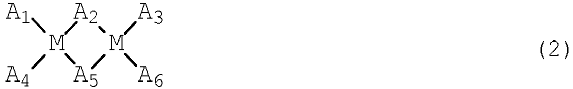 wherein M is the transition metal and A₁ to A₆ are ligands.

6. The process according to any of the claims 1, 2 or 5 characterized that said transition metal complex has the general formula (3)
[M(µ-X₁)X₂(L)]₂ (3)
wherein M is the transition metal, L is a monodentate phosphorus ligand, X₁ is the anion of the conjugate base of an organic or inorganic acid and X₂ is the anion of the conjugate base of an organic or inorganic acid or tin trichloride anion.

7. The process according to any of claims 1, 2, 5 or 6 characterized that said transition metal complex is a dimeric transition metal catalyst as given by formulas (9) and (10) 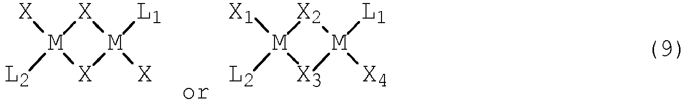 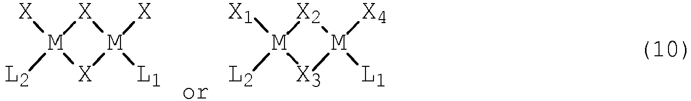 wherein M is the transition metal, L1 and L2 are a monodentate phosphorus ligand, the anions X, X₂ and X₃ in formula (9) or (10) are the anions of Cl, Br or I and the anions X₁ and X₄ in formula (9) or (10) are the anions of Cl, Br, I or SnCl₃.

8. The process according to any of claims 1 to 4 characterized that said transition metal complex is a monomeric transition metal catalyst as given by formula (11)
[MX₂(S₁)(L)] (11)
wherein M is the transition metal, L is a monodentate phosphorus ligand, S₁ is a monodentate ligand and X is the anion of the conjugate base of an organic or inorganic acid.

9. The process according to any of the claims 1 to 3, characterized that said transition metal complex comprises following structure given in following corresponding formula (1b) 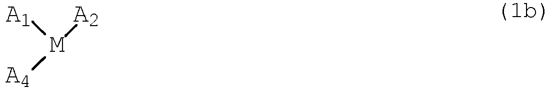 wherein M is the transition metal, A₁, A₂ and A₄ are ligands.

10. The process according to any of claims 1 to 3 or 9 characterized that said transition metal complex is a monomeric transition metal catalyst containing only one monodentate phosphorus ligand, as given by formulae (12)or(13)
[(L)Pt(S₂)(S₃] (12)
[(L)Pt(S₄^S₅)] (13)
wherein Pt is the transition metal, L is a monodentate phosphorus ligand, S2 and S3 are monodentate ligands and S4^S5 is a bidentate ligand.

11. The process according to any of claims 1 to 10 characterized that the phosphorus ligand-to-metal M molar ratio is between 0.95:1 and 1:0.95.

12. The process according to any of claims 1 to 11 characterized that the monodentate phosphorus ligand the monodentate ligand is chosen from an organic phosphine of the formula PR₁R₂R₃ wherein R₁, R₂ and R₃ are organic groups which can be identical or different.

13. The process according to claim 12, characterized that R₁, R₂ and R₃ are chosen from alkyl groups, aryl groups or substituted alkyl or aryl groups.

14. The process according to claim 12, characterized that R₁, R₂ and R₃ are chosen from phenyl, (cyclo)alkyl-substituted aryl groups, alkoxy-substituted aryl groups, mixed alkyl-/alkoxy-subsitituted aryl groups and (optionally substituted) aryl-substituted aryl groups.

15. The process according to claim 13 or 14, characterized that the aryl groups are chosen from 2,3-subsituted, 2,6-subsituted, 2,4,6-subsituted, 3,4-substituted, 3,5-substituted and 3,4,5-substituted aryl groups.

16. The process according to claim 15, characterized that the aryl groups are alkyl-substituted aryl groups, preferred alkyl groups are CₙH₂ₙ₊1 alkyls with n from 1 to 15 and more preferably alkyl groups is chosen from methyl, ethyl, propyl, 2-propyl, n-butyl-, 2-butyl, iso-butyl, tert-butyl, n-pentyl, tert-pentyl, neo-pentyl, iso-pentyl, sec-pentyl, 3-pentyl, n-hexyl or mixtures thereof.

17. Process according to any of claims 1 to 16 characterized that transition metal catalyst quantity expressed in molar quantity of the transition metal M based on the total amount of Sn used is <5mol% and even <0.1mol%.

18. Process according to any of claims 1 to 16 characterized that transition metal catalyst is preferably employed in the range between 1·10⁻⁵ and 1·10⁻¹ mol, more preferably in the range between 1·10⁻⁵ and 1·10⁻² mol, most preferably between 1·10⁻⁵ and 1·10⁻³ mol of metal M of the catalyst per mol of total Sn present.

19. Use of a transition metal complex in a process according to claims 1 to 18, said complex containing one monodentate phosphorus ligand ligand per metal centre, for the production of monoalkyltin trihalides involving a redistribution reaction between tetraalkyltins, trialkyltin halides or dialkyltin dihalides and tin tetrahalides, said process comprising contacting tetraalkyltin, trialkyltin halide or dialkyltin dihalide with tin tetrahalide.

## Patentansprüche

1. Verfahren zur Herstellung von Monoalkylzinntrihalogeniden, das eine Umverteilungsreaktion zwischen Tetraalkylzinnen, Trialkylzinnhalogeniden oder Dialkylzinndihalogeniden und Zinntetrahalogeniden umfasst, wobei das Verfahren das in Kontakt bringen von Tetraalkylzinn, Trialkylzinnhalogenid oder Dialkylzinndihalogenid mit Zinntetrahalogenid in Gegenwart von mindestens einem Übergangsmetallkomplex umfasst, wobei der Komplex nur einen einzähnigen Phosphorliganden pro Metallzentrum enthält, um die Monoalkylzinntrihalogenide zu ergeben, **dadurch gekennzeichnet, dass** das Metall des Übergangsmetallkomplexes ausgewählt wird aus Nickel (Ni), Palladium (Pd) und/oder Platin (Pt).

2. Verfahren nach Anspruch 1, **dadurch gekennzeichnet, dass** das Metall des Übergangsmetallkomplexes Pt ist.

3. Verfahren nach Anspruch 1 oder 2, **dadurch gekennzeichnet, dass** der Übergangsmetallkomplex die folgende Struktur umfasst, die in der folgenden entsprechenden Formel (1) angegeben ist
A₁-M(A)ₙ (1)
worin M das Übergangsmetall ist, n 2 oder 3 ist; A₁ und A Liganden sind und der Ligand A₁ ein einzähniger Phosphorligand ist.

4. Verfahren nach einem der Ansprüche 1 bis 3, **dadurch gekennzeichnet, dass** der Übergangsmetallkomplex die folgende Struktur umfasst, die in der folgenden entsprechenden Formel (la) angegeben ist 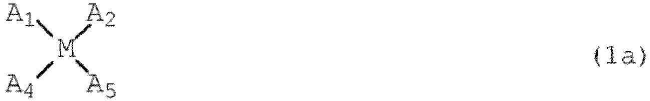 worin M das Übergangsmetall ist und A₁, A₂, A₄ und A₅ Liganden sind.

5. Verfahren nach Anspruch 1 oder 2, **dadurch gekennzeichnet, dass** der Übergangsmetallkomplex ein dimerer Übergangsmetallkomplex der allgemeinen Formel (2) ist 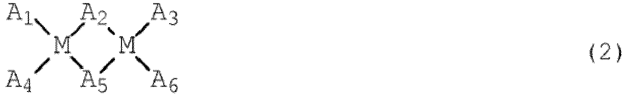 worin M das Übergangsmetall ist und A₁ bis A₆ Liganden sind.

6. Verfahren nach einem der Ansprüche 1, 2 oder 5, **dadurch gekennzeichnet, dass** der Übergangsmetallkomplex die allgemeine Formel (3) aufweist
[M(µ-X₁)X₂(L)]₂ (3)
worin M das Übergangsmetall ist, L ein einzähniger Phosphorligand ist, X₁ das Anion der konjugierten Base einer organischen oder anorganischen Säure ist und X2 das Anion der konjugierten Base einer organischen oder anorganischen Säure oder ein Zinntrichloridanion ist.

7. Verfahren nach einem der Ansprüche 1, 2, 5 oder 6, **dadurch gekennzeichnet, dass** der Übergangsmetallkomplex ein dimerer Übergangsmetallkatalysator ist, wie in den Formeln (9) und (10) angegeben 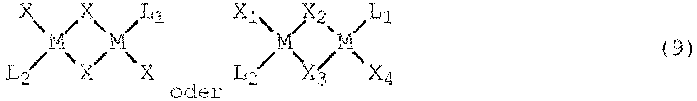 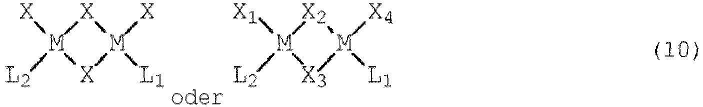 worin M das Übergangsmetall ist, L1 und L2 ein einzähniger Phosphorligand sind, die Anionen X, X₂ und X₃ in Formel (9) oder (10) die Anionen von Cl, Br oder I sind und die Anionen X₁ und X₄ in Formel (9) oder (10) die Anionen von Cl, Br, I oder SnCl₃ sind.

8. Verfahren nach einem der Ansprüche 1 bis 4, **dadurch gekennzeichnet, dass** der Übergangsmetallkomplex ein monomerer Übergangsmetallkatalysator ist, wie in Formel (11) angegeben
[MX₂(S₁)(L)] (11)
worin M das Übergangsmetall ist, L ein einzähniger Phosphorligand ist, S₁ ein einzähniger Ligand ist und X das Anion der konjugierten Base einer organischen oder anorganischen Säure ist.

9. Verfahren nach einem der Ansprüche 1 bis 3, **dadurch gekennzeichnet, dass** der Übergangsmetallkomplex folgende Struktur umfasst, die in der folgenden entsprechenden Formel (1b) angegeben ist 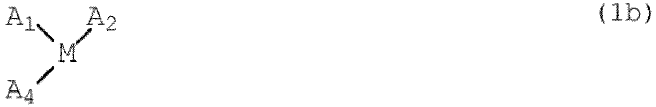 worin M das Übergangsmetall ist, A₁, A₂ und A₄ Liganden sind.

10. Verfahren nach einem der Ansprüche 1 bis 3 oder 9, **dadurch gekennzeichnet, dass** der Übergangsmetallkomplex ein monomerer Übergangsmetallkatalysator ist, der nur einen einzähnigen Phosphorliganden enthält, wie in den Formeln (12) oder (13) angegeben
[(L)Pt(S₂)(S₃] (12)
[(L)Pt(S₄^S₅)] (13)
worin Pt das Übergangsmetall ist, L ein einzähniger Phosphorligand ist, S₂ und S₃ einzähnige Liganden sind und S₄^S₅ ein zweizähniger Ligand ist.

11. Verfahren nach einem der Ansprüche 1 bis 10, **dadurch gekennzeichnet, dass** das molare Verhältnis von Phosphorligand zu Metall M zwischen 0,95:1 und 1:0,95 liegt.

12. Verfahren nach einem der Ansprüche 1 bis 11, **dadurch gekennzeichnet, dass** der einzähnige Phosphorligand der einzähnige Ligand ausgewählt wird aus einem organischen Phosphin der Formel PR₁R₂R₃, worin R₁, R₂ und R₃ organische Gruppen sind, die identisch oder voneinander verschieden sein können.

13. Verfahren nach Anspruch 12, **dadurch gekennzeichnet, dass** R₁, R₂ und R₃ ausgewählt werden aus Alkylgruppen, Arylgruppen oder substituierten Alkyl- oder Arylgruppen.

14. Verfahren nach Anspruch 12, **dadurch gekennzeichnet, dass** R₁, R₂ und R₃ ausgewählt werden aus Phenyl, (Cyclo)Alkyl-substituierten Arylgruppen, Alkoxysubstituierten Arylgruppen, gemischten Alkyl-/Alkoxy-substituierten Arylgruppen und (wahlweise substituierten) Aryl-substituierten Arylgruppen.

15. Verfahren nach Anspruch 13 oder 14, **dadurch gekennzeichnet, dass** die Arylgruppen ausgewählt werden aus 2,3-substituierten, 2,6-substituierten, 2,4,6-substituierten, 3,4-substituierten, 3,5-substituierten und 3,4,5-substituierten Arylgruppen.

16. Verfahren nach Anspruch 15, **dadurch gekennzeichnet, dass** die Arylgruppen Alkyl-substituierte Arylgruppen sind, wobei bevorzugte Alkylgruppen CₙH₂ₙ₊₁ Alkyle mit n von 1 bis 15 sind und wobei besonders bevorzugt die Alkylgruppen ausgewählt werden aus Methyl, Ethyl, Propyl, 2-Propyl, n-Butyl-, 2-Butyl-, Isobutyl-, tert-Butyl-, n-Pentyl-, tert-Pentyl-, Neopentyl-, Isopentyl-, sek-Pentyl, 3-Pentyl, n-Hexyl oder Gemischen davon.

17. Verfahren nach einem der Ansprüche 1 bis 16, **dadurch gekennzeichnet, dass** die Menge an Übergangsmetallkatalysator, ausgedrückt in molarer Menge des Übergangsmetalls M, bezogen auf die Gesamtmenge an verwendetem Sn, <5 Mol-% und sogar <0,1 Mol-% beträgt.

18. Verfahren nach einem der Ansprüche 1 bis 16, **dadurch gekennzeichnet, dass** der Übergangsmetallkatalysatorvorzugsweise im Bereich zwischen 1 · 10⁻⁵ und 1 · 10⁻¹ Mol eingesetzt wird, vorzugsweise im Bereich zwischen 1 · 10⁻⁵ und 1 · 10⁻² Mol, besonders bevorzugt zwischen 1 · 10⁻⁵ und 1 · 10⁻³ Mol des Metalls M des Katalysators pro Mol des gesamten vorhandenen Sn.

19. Verwendung eines Übergangsmetallkomplexes in einem Verfahren nach den Ansprüchen 1 bis 18, wobei der Komplex einen einzähnigen Phosphorligandenliganden pro Metallzentrum enthält, zur Herstellung von Monoalkylzinntrihalogeniden, umfassend eine Umverteilungsreaktion zwischen Tetraalkylzinnen, Trialkylzinnhalogeniden oder Dialkylzinndihalogeniden und Zinntetrahalogeniden, wobei das Verfahren das in Kontakt bringen von Tetraalkylzinn, Trialkylzinnhalogenid oder Dialkylzinndihalogenid mit Zinntetrahalogenid umfasst.

## Revendications

1. Procédé de production de trihalogénures de monoalkylétain mettant en oeuvre une réaction de redistribution entre des tétraalkylétains, des halogénures de trialkylétain ou des dihalogénures de dialkylétain et des tétrahalogénures d'étain, ledit procédé comprenant la mise en contact de tétraalkylétain, halogénure de trialkylétain ou dihalogénure de dialkylétain avec un tétrahalogénure d'étain en présence d'au moins un complexe de métal de transition, ledit complexe contenant un seul ligand de phosphore monodentate par centre métallique, pour obtenir lesdits trihalogénures de monoalkylétain, **caractérisé en ce que** le métal dudit complexe de métal de transition est choisi parmi le nickel (Ni), le palladium (Pd) et/ou le platine (Pt) .

2. Procédé selon la revendication 1 **caractérisé en ce que** le métal dudit complexe de métal de transition est Pt.

3. Procédé selon la revendication 1 ou 2, **caractérisé en ce que** ledit complexe de métal de transition comprend la structure suivante décrite dans la formule (1) correspondante suivante
A₁-M(A)ₙ (1)
dans laquelle M est le métal de transition, n est 2 ou 3, A₁ et A sont des ligands et le ligand A₁ est un ligand de phosphore monodentate.

4. Procédé selon l'une quelconque des revendications 1 à 3, **caractérisé en ce que** ledit complexe de métal de transition comprend la structure suivante décrite dans la formule correspondante suivante (la) 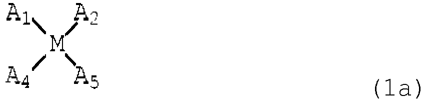 dans laquelle M est le métal de transition et A₁, A₂, A₄ et A₅ sont des ligands.

5. Procédé selon les revendications 1 ou 2, **caractérisé en ce que** ledit complexe de métal de transition est un complexe de métal de transition dimère de formule générale (2) 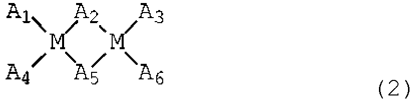 dans laquelle M est le métal de transition et A₁ à A₆ sont des ligands.

6. Procédé selon l'une quelconque des revendications 1, 2 ou 5 **caractérisé en ce que** ledit complexe de métal de transition a la formule générale (3)
[M(µ-X₁)X₂(L)]₂ (3)
dans laquelle M est le métal de transition, L est un ligand de phosphore monodentate, X₁ est l'anion de la base conjuguée d'un acide organique ou inorganique et X₂ est l'anion de la base conjuguée d'un acide organique ou inorganique ou l'anion de trichlorure d'étain.

7. Procédé selon l'une quelconque des revendications 1, 2, 5 ou 6 **caractérisé en ce que** ledit complexe de métal de transition est un catalyseur à métal de transition dimère tel que décrit par les formules (9) et (10) 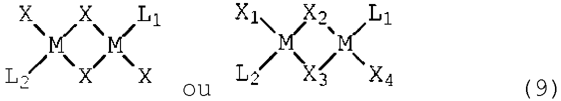 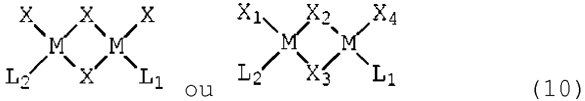 dans lesquelles M est le métal de transition, L₁ et L₂ sont un ligand de phosphore monodentate, les anions X, X₂ et X₃ dans la formule (9) ou (10) sont les anions de Cl, Br ou I et les anions X₁ et X₄ dans la formule (9) ou (10) sont les anions de Cl, Br, I ou SnCl₃.

8. Procédé selon l'une quelconque des revendications 1 à 4 **caractérisé en ce que** ledit complexe de métal de transition est un catalyseur à métal de transition monomère tel que décrit par la formule (11)
[MX₂(S₁)(L)] (11)
dans laquelle M est le métal de transition, L est un ligand de phosphore monodentate, S₁ est un ligand monodentate et X est l'anion de la base conjuguée d'un acide organique ou inorganique.

9. Procédé selon l'une quelconque des revendications 1 à 3, **caractérisé en ce que** ledit complexe de métal de transition comprend la structure suivante décrite dans la formule correspondante suivante (1b) 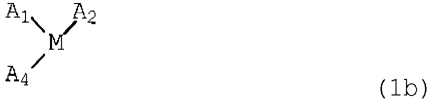 dans laquelle M est le métal de transition, A₁, A₂ et A₄ sont des ligands.

10. Procédé selon l'une quelconque des revendications 1 à 3 ou 9 **caractérisé en ce que** ledit complexe de métal de transition est un catalyseur à métal de transition monomère contenant un seul ligand de phosphore monodentate, comme décrit par les formules (12) ou (13)
[(L)Pt(S₂)(S₃)] (12)
[(L)Pt(S₄^S₅)] (13)
dans lesquelles Pt est le métal de transition, L est un ligand de phosphore monodentate, S2 et S3 sont des ligands monodentates et S4^S5 est un ligand bidentate.

11. Procédé selon l'une quelconque des revendications 1 à 10 **caractérisé en ce que** le rapport molaire du ligand de phosphore au métal M est compris entre 0,95:1 et 1:0,95.

12. Procédé selon l'une quelconque des revendications 1 à 11 **caractérisé en ce que** le ligand de phosphore monodentate, le ligand monodentate est choisi parmi une phosphine organique de formule PR₁R₂R₃ dans laquelle R₁, R₂ et R₃ sont des groupes organiques qui peuvent être identiques ou différents.

13. Procédé selon la revendication 12, **caractérisé en ce que** R₁, R₂ et R₃ sont choisis parmi des groupes alkyle, des groupes aryle ou des groupes alkyle ou aryle substitués.

14. Procédé selon la revendication 12, **caractérisé en ce que** R₁, R₂ et R₃ sont choisis parmi phényle, des groupes aryle substitués par (cyclo)alkyle, des groupes aryle substitués par alcoxy, des groupes aryle substitués par alkyle/alcoxy mixtes et des groupes aryle substitués par aryle (facultativement substitué).

15. Procédé selon la revendication 13 ou 14, **caractérisé en ce que** les groupes aryle sont choisis parmi des groupes aryle 2,3-substitués, 2,6-substitués, 2,4,6-substitués, 3,4-substitués, 3,5-substitués et 3,4,5-substitués.

16. Procédé selon la revendication 15, **caractérisé en ce que** les groupes aryle sont des groupes aryle substitués par alkyle, des groupes alkyle préférés sont des alkyles CₙH₂ₙ₊₁ avec n étant de 1 à 15 et plus préférablement le groupe alkyle est choisi parmi méthyle, éthyle, propyle, 2-propyle, n-butyle, 2-butyle, isobutyle, tert-butyle, n-pentyle, tert-pentyle, néopentyle, isopentyle, sec-pentyle, 3-pentyle, n-hexyle ou des mélanges de ceux-ci.

17. Procédé selon l'une quelconque des revendications 1 à 16 **caractérisé en ce que** la quantité de catalyseur à métal de transition exprimée en quantité molaire du métal de transition M sur la base de la quantité totale de Sn utilisée est < 5 % en moles et même < 0,1 % en moles.

18. Procédé selon l'une quelconque des revendications 1 à 16 **caractérisé en ce que** le catalyseur à métal de transition est de préférence utilisé dans la plage comprise entre 1·10⁻⁵ et 1·10⁻¹ mol, plus préférablement dans la plage comprise entre 1·10⁻⁵ et 1·10⁻² mol, de manière préférée entre toutes entre 1·10⁻⁵ et 1·10⁻³ mol de métal M du catalyseur par mol de Sn total présent.

19. Utilisation d'un complexe de métal de transition dans un procédé selon les revendications 1 à 18, ledit complexe contenant un ligand de phosphore monodentate par centre métallique, pour la production de trihalogénures de monoalkylétain mettant en oeuvre une réaction de redistribution entre des tétraalkylétains, des halogénures de trialkylétain ou des dihalogénures de dialkylétain et des tétrahalogénures d'étain, ledit procédé comprenant la mise en contact de tétraalkylétain, halogénure de trialkylétain ou dihalogénure de dialkylétain avec un tétrahalogénure d'étain.
